# EUROPÄISCHE PATENTSCHRIFT

(11) **EP 0 656 917 B1**
(45) Veröffentlichungstag und Bekanntmachung des Hinweises auf die Patenterteilung: **12.03.1997**
(21) Anmeldenummer: 93919149.0
(22) Anmeldetag: 24.08.1993
(51) Int. Cl.: C08G 18/66, C08G 18/08, E21D 20/02

(54) **VERFAHREN ZUR ANWENDUNG EINES KUNSTHARZSYSTEMS**
PROCESS FOR USING A SYNTHETIC RESIN SYSTEM
PROCEDE D'UTILISATION D'UN SYSTEME DE RESINE SYNTHETIQUE

(30) Priorität: 25.08.1992 DE 4228178
(43) Veröffentlichungstag der Anmeldung: 14.06.1995
(73) Patentinhaber: Bergwerksverband GmbH, D-45307 Essen (DE)
(72) Erfinder: MEHESCH, Hans, D-45134 Essen (DE); CORNLEY, Wolfgang, D-45966 Gladbeck (DE); FISCHER, Martin, D-46119 Oberhausen (DE)
(74) Vertreter: Schumacher, Horst, Dr. Dipl.-Phys.
(86) Internationale Anmeldenummer: EP9302266
(87) Internationale Veröffentlichungsnummer: WO9404588

(56) Entgegenhaltungen:
- EP-A- 0 063 534
- EP-A- 0 085 826
- EP-A- 0 425 754
- DE-A- 2 705 751
- DE-A- 3 343 212
- CENTRAL PATENTS INDEX, BASIC ABSTRACTS JOURNAL Week 3181, Derwent Publications Ltd., London, GB; AN 81-55816D & JP,A,56 070 075

## Beschreibung

Die Erfindung betrifft ein Verfahren zur Anwendung eines Kunstharzsystems auf Polyurethanbasis, wobei das System aus einer Isocyanatkomponente a) und aus einer Polyolkomponente b) besteht sowie den Komponenten a) und/oder b) Hilfs- und Zusatzmitteln c) hinzufügbar sind und die Polyolkomponente b) einen unterschüssigen Anteil von primären oder sekundären Di- oder Polyaminen enthält. Derartige Kunstharzsysteme sind beispielsweise aus der DE-OS 36 10 729 bekannt. Sie werden zur Herstellung von unter dem Einfluß von Luftfeuchtigkeit aushärtenden Beschichtungs- und Abdichtungsmitteln verwendet.

Für die Befestigung von Ankerstangen im Gebirge ist es bereits bekannt, sogenannte Klebanker einzusetzen, bei denen die Verklebung durch Zweikomponenten-Kunstharzsysteme vorgenommen wird. Dabei können die Harzkomponenten entweder in getrennten Kartuschen in das Bohrloch eingebracht werden, in die anschließend die Ankerstange unter Zerstören der Kartuschen eingestoßen und durch Drehen das aushärtbare Gemisch hergestellt wird, das den Anker nach dem Aushärten durch Verkleben mit dem Gebirge festhält.

Das härtbare Gemisch kann aber auch unter Verwendung einer Pumpe vor oder nach dem Einführen der Ankerstange in das Bohrloch eingedrückt werden.

Insbesondere bei über Kopf hergestellten Bohrlöchern besteht das Problem, das ein Teil des Harzgemisches teilweise ins Bohrloch zurückfließt, so daß das Einkleben des Ankers nur unvollständig erfolgt.

Der Erfindung liegt die Aufgabe zugrunde, diesen Nachteil beim Einbringen von Klebankern zu vermeiden.

Diese Aufgabe wird erfindungsgemäß durch die kennzeichnenden Merkmale von Patentanspruch 1 gelöst. Es hat sich überraschenderweise in Versuchen erwiesen, daß das erfindungsgemäße Zweikomponenten-Kunstharzgemisch mit der gelartigen Konsistenz gut pumpbar ist und leicht auch in aufwärtsgerichtete Bohrlöcher eingebracht werden kann, ohne daß es, wenn es im Bohrlochtiefsten angekommen ist, vor dem Aushärten durch die Schwerkraft wieder herausfließt. Äußerst überraschend ist es auch, daß das Zweikomponenten-Gemisch eine ausreichende Tragkraft aufweist, um den Klebanker bis zum Aushärten im Bohrloch festzuhalten.

Weitere Ausgestaltungen sind in den Unteransprüchen niedergelegt.

Bei der beim erfindungsgemäßen Verfahren einzusetzenden Polyisocyanatkomponente a) handelt es sich vorzugsweise um Polyphenylen-polymethylen-polyisocyanate, wie sie durch Anilin/Formaldehyd-Kondensation und anschließende Phosgenierung hergestellt werden ("polymeres MDI") oder um Carbodiimid-, Biuret-, Urethan- und/oder Allophanatgruppen aufweisende, bei Raumtemperatur flüssige Derivate dieser Polyisocyanate sowie deren Prepolymere, d.h. Umsetzungsprodukte von Polyisocyanaten mit Polyolen im Unterschuß. Als Polyole zur Herstellung von Prepolymeren kommen aus der Polyurethanchemie allgemein bekannte Verbindungen in Betracht, vorzugsweise langkettige Polyole mit OH-Zahlen unterhalb von 150 mg KOH/g Substanz. Die bei Raumtemperatur flüssigen, durch Phosgenierung von Anilin/Formaldehyd-Kondensaten erhaltenen Polyisocyanatgemische ("polymeres MDI") sowie deren flüssige, NCO-Gruppen aufweisende Umsetzungsprodukte mit unterschüssigen Mengen (NCO/OH-Molverhältnis = 1 : 0,005 bis 1 : 0,3) mehrwertiger Alkohole des Molekulargewichtsbereiches 62 bis 3000, insbesondere Ethergruppen aufweisende Polyole des Molekulargewichtsbereiches 106 bis 3000 sind bevorzugt. Bei Raumtemperatur flüssige Gemische aus 2,4'- und 4,4'-Diisocyanatodiphenylmethan sind ebenfalls als Polyisocyanatkomponenten a) geeignet. Grundsätzlich kommen erfindungsgemäß aber auch andere Polyisocyanate, wie sie z.B. aus der DE-OS 28 32 253, Seite 10 und 11, bekannt sind, in Frage. Ganz besonders bevorzugt werden Polyisocyanatgemische der Diphenylmethanreihe einer Viskosität bei 25°C von 50 bis 500 mPa.s mit einem NCO-Gehalt von ca. 30 bis 32 Gew.-% eingesetzt.

Bei der Polyolkomponente b) handelt es sich um Gemische aus organischen Polyhydroxylverbindungen mit OH-Zahlen zwischen 30 und 2000, wobei die OH-Zahl des Gemisches zwischen 200 und 500 mg KOH/g Substanz liegt.

Bei den Polyhydroxylverbindungen handelt es sich vorzugsweise um die aus der Polyurethanchemie an sich bekannten Polyetherpolyole bzw. um Gemische verschiedener derartiger Polyetherpolyole. Gut brauchbare Polyetherpolyole sind beispielsweise Propoxylierungsprodukte von zwei- bis achtwertigen Startermolekülen wie beispielsweise Wasser, 1,2-Dihydroxypropan, Trimethylolpropan, Pentaerythrit, Glycerin, Sorbit, Ethylendiamin und gegebenenfalls Rohrzucker. Im allgemeinen weist die Komponente b) eine mittlere Hydroxylfunktionalität von 2,0 bis 5,0, vorzugsweise 2,0 bis 3 auf. Geeignete derartige Gemische können beispielsweise dadurch erhalten werden, daß man entsprechende Gemische von Startermolekülen der beispielhaft genannten Art einer Propoxylierungsreaktion unterzieht. Es ist jedoch auch möglich, separat hergestellte Polyhydroxylpolyether nach ihrer Herstellung abzumischen.

Als erfindungsgemäße Amine werden primäre oder sekundäre Di- oder Polyamine und deren Gemische verwendet.

Geeignete aromatische Amine sind beispielsweise: 4,4'Diaminodiphenylmethan, 3,3'Dimethyl-4,4'diaminodiphenylmethan, 3,3'Dichlor-4,4'diaminodiphenylmethan, 1,3,5-Triisopropyl-2,4-diaminobenzol, 1-Methyl-3,5-diethyl-2,4-diaminobenzol, 1-Methyl-3,5-diethyl-2,6-diaminobenzol, 1,3,5-Triethyl-2,4-diaminobenzol und technische Gemische mit den drei letztgenannten Verbindungen 3,5-Di(methylthio)-2,4-toluoldiamin, 3,5-Di(methylthio)-2,6-toluoldiamin und deren technische Gemische, 1,2-Ethylen-di-(4-amino)thiophenol-ether, 1,3-Propandiol-di(p-amino)-benzoat, 3,5-Diamino-4-chlorobenzoesäureisobutylester, 1,3-Propylendi-(4-amino)benzoat.

Geeignete cycloaliphatische Amine sind: Isophorondiamin, 4,4'Diaminodicyclohexylmethan, 3,3'Dimethyl-4,4'diaminocyclohexylmethan, N-Cyclohexyl-1,3-diaminopropan, N-(β-Aminoethyl)piperazin.

Geeignete aliphatische Amine sind z.B. Diethylentriamin, Triethylentetramin, Tetraethylenpentamin, Di-isopropyltriamin.

Als in der Polyurethanchemie übliche Hilfs- und Zusatzmittel c) konnen verwendet werden:

Katalysatoren zur Beschleunigung der verschiedenen Isocyanat-Additionsreaktionen wie insbesondere wismut- oder zinnorganische Verbindungen, z.B. Dibutylzinndilaurat, organische Alkalisalze, z.B. Kaliumacetat oder tertiäre Amine, z.B. Triethylendiamin, Dimethylethanolamin oder N-Ethylenmorpholin. Diese Katalysatoren werden im allgemeinen in einer Menge von bis zu 2 Gew.-%, vorzugsweise in einer Menge von 0,1 - 1 Gew.-%, bezogen auf das Gesamtgemisch, mitverwendet.

Wasserfänger zur Herstellung ungeschäumter oder schwach geschäumter Produkte, z.B. Zeolith-Paste, die in einer Menge zwischen 0,2 und 10 Gew.-%, vorzugsweise zwischen 1 und 5 Gew.-% eingesetzt werden.

Schaumregulatoren, d.h. Schaumstabilisatoren oder -destabilisatoren, vorzugsweise auf Polysiloxanbasis. Sie werden in einer Menge bis zu 2 %, vorzugsweise zwischen 1 ppm und 1000 ppm, bezogen auf das Gesamtgemisch, zugesetzt.

Gegebenenfalls Wasser als Treibmittel, das in Mengen bis zu 5 Gew.-%, vorzugsweise 0,5 - 2 Gew.-%, zugesetzt werden kann.

Gegebenenfalls physikalische Treibmittel, wie teilhalogenierte Kohlenwasserstoffe oder andere flüchtige Verbindungen, z.B. Dichlorfluormethan oder Pentan, von denen bis zu 20 % zugesetzt werden können.

Gegebenenfalls organische oder anorganische Flammschutzmittel, z.B. Phosphorsäureester bzw. Aluminiumhydroxidderivate in Mengen bis zu 20 Gew.-% für flüssige und 50 Gew.% für feste Mittel.

Gegebenenfalls Füllstoffe, z.B. Harnstoff, Quarzmehl oder Talk in Mengen bis zu 50 %.

In den beim erfindungsgemäßen Verfahren einzusetzenden Reaktionsgemischen liegen die einzelnen Komponenten im übrigen in einer solchen Menge vor, die einer Isocyanat-Kennzahl von 90 bis 150, vorzugsweise 120 bis 140 entsprechen. Unter "Isocyanatkennzahl" ist hierbei der Quotient aus der Anzahl der im Reaktionsgemisch vorliegenden Isocyanatgruppen geteilt durch die Anzahl der im Reaktionsgemisch vorliegenden, gegenüber Isocyanatgruppen reaktionsfähigen Gruppen, multipliziert mit 100, zu verstehen, wobei das Wasser als difunktionelle Verbindung in die Berechnung eingeht.

Vor der Durchführung des erfindungsgemäßen Verfahrens werden im allgemeinen die gegebenenfalls mitzuverwendenden Hilfs- und Zusatzmittel c) mit der Polyolkomponente b) vereinigt, worauf sich eine Verarbeitung nach dem Zweikomponenten-Prinzip anschließt. Dies bedeutet, daß zur Herstellung der Reaktionsgemische die Polyisocyanat-Komponente a) mit der Polyolkomponente b) bzw. dem Gemisch aus Polyolkomponente b) und den Hilfs- und Zusatzmitteln c) intensiv durchmischt wird. Hierzu können die an sich bekannten Mischaggregate des Standes der Technik verwendet werden.

### Verfahrensdarstellung

Aus der Ankertechnik ist bekannt, daß hoher viskose Zweikomponenten-Kunstharzmassen mittels Dosierpumpen mit integrierter Druckvorlage verarbeitet werden. Diese Pumpen sind, bedingt durch die Viskosität der Zweikomponenten-Kunstharzmassen, nicht selbstansaugend, und für den Verpeßvorgang wird ein höherer Injektionsdruck benötigt. Durch die Anwendung von Zweikomponenten-Kunstharzmassen können die bereits eingeführten Dosierpumpen der PUR-Gesteinsverfestigung eingesetzt werden. Die niedrig viskosen Einzelkomponenten der Zweikomponenten-Kunstharzmasse werden von der Dosierpumpe angesaugt und reagieren nach dem Durchmischen, z.B. mit einem Statikmischer, zu einem höher viskosen Produkt, das dann nur noch mittels Druck gefördert werden kann. Diese gemischte Zweikomponenten-Kunstharzmasse verklebt nach dem Aushärten die handelsüblichen Injektionsanker im Bohrloch bzw. können nach dem Mörtelverfahren Stabanker im Bohrloch verkleben.

Die nachfolgenden Ausführungsbeispiele gemäß den Tabellen 1 bis 4 dienen der weiteren Erläuterung des Verfahrens. Alle Prozentangaben beziehen sich auf Massenprozente.

### BEISPIELE

In den Beispielen gemäß den Tabellen 3 und 4 werden die in den Tabellen 1 und 2 aufgeführten Ausgangskomponenten für die Systemkomponenten b) und c) eingesetzt:

**Tabelle 1**

| **System komponente b)** | **Ausgangskomponenten** | **OH-Zahl [mg KOM/g]** | **Viskosität bei 25°C (mPa.s)** |
|---|---|---|---|
| Basispolyol I | Glycerin und Propylenoxid | 380 | 450 |
| Basispoyol II | Saccharose, 1,2-Propandiol, Propylenoxid | 380 | 580 |
| Basispolyol III | Trimethylolpropan Propylenoxid | 380 | 600 |
| Flexibilisierungspolyol I | 1,2-Propandiol Propylenoxid | 56 | 324 |
| Flexibilisierungspolyol II | dto | 260 | 73 |
| Flexibilisierungspolyol III | Butandiol Tetrahydrofuran | 176 | 277 |
| Flexibilisierungspolyol IV | Triethanolamin Propylenoxid | 27 | 870 |
| Ethylenglykol | - | 1808 | 16 |
| Diethylenglykol | - | 1057 | 26 |
| Glycerin | - | 1827 | 750 |
| Rizinusöl | | 160 | 680 |
| Diamin I | (N-(β-Aminoethyl)piperazin) | | |
| Diamin II | (N-Cyclohexyl-1,3-diaminpropen) | | |
| Diamin III | (3,3'-Dimethyl-4,4'diaminocyclohexylmethan) | | |
| Diamin IV | Techn. Gemisch aus 1,3,5-Triethyl-2,4-diaminobenzol | | |

**Tabelle 2**

| **Systemkomponenten c)** | **Ausgangskomponenten** |
|---|---|
| Katalysator I | Dimethylethanolamin |
| Katalysator II | Triethylendiamin, 33 % in Ethylenglykol |
| Katalysator III | Dibutylzinndilaurat |
| Katalysator IV | Kaliumacetat |
| Katalysator V | 2,4,6-Tris(dimethylaminomethyl)phenol |
| Zeolith-Paste | Zeolithtyp ... 50 % in Rizinusöl |

Aus den Tabellen 1 bis 4 geht hervor, daß für das Zweikomponenten- Polyurethansystem gemäß der Erfindung eine breite Palette an Ausgangskomponenten, insbesondere für die Systemkomponente b) (Tabelle 1) sowie auch für die Systemkomponente c) (Tabelle 2).

Selbstverständlich sind außer den aufgeführten Ausgangskomponenten auch noch weitere geeignet, denn bei den in Tabelle 1 und 2 aufgeführten Komponenten handelt es sich lediglich um solche, die in wechselnden Zusammensetzungen bzw. Formulierungen in den Tabellen 3 und 4 aufgelistet sind soweit sie in Versuchsreihen in Verbindung mit in den Tabellen 3 und 4 genannten Systemkomponenten a) zu geeigneten Zweikomponenten-Polyurethangemischen geführt haben, die in Bruchteilen einer Minute zu einer gelartigen Konsistenz gelieren und in der Lage sind, in diesem quasi-thixotropen Zustand einen Anker in einem nach oben gebohrten Bohrloch verläßlich solange festzuhalten, bis in einer nach Minuten bemessenen Erstarrungszeit eine Befestigungswirkung durch Verkleben erreicht ist, die den Anker zur Lastaufnahme befähigen.

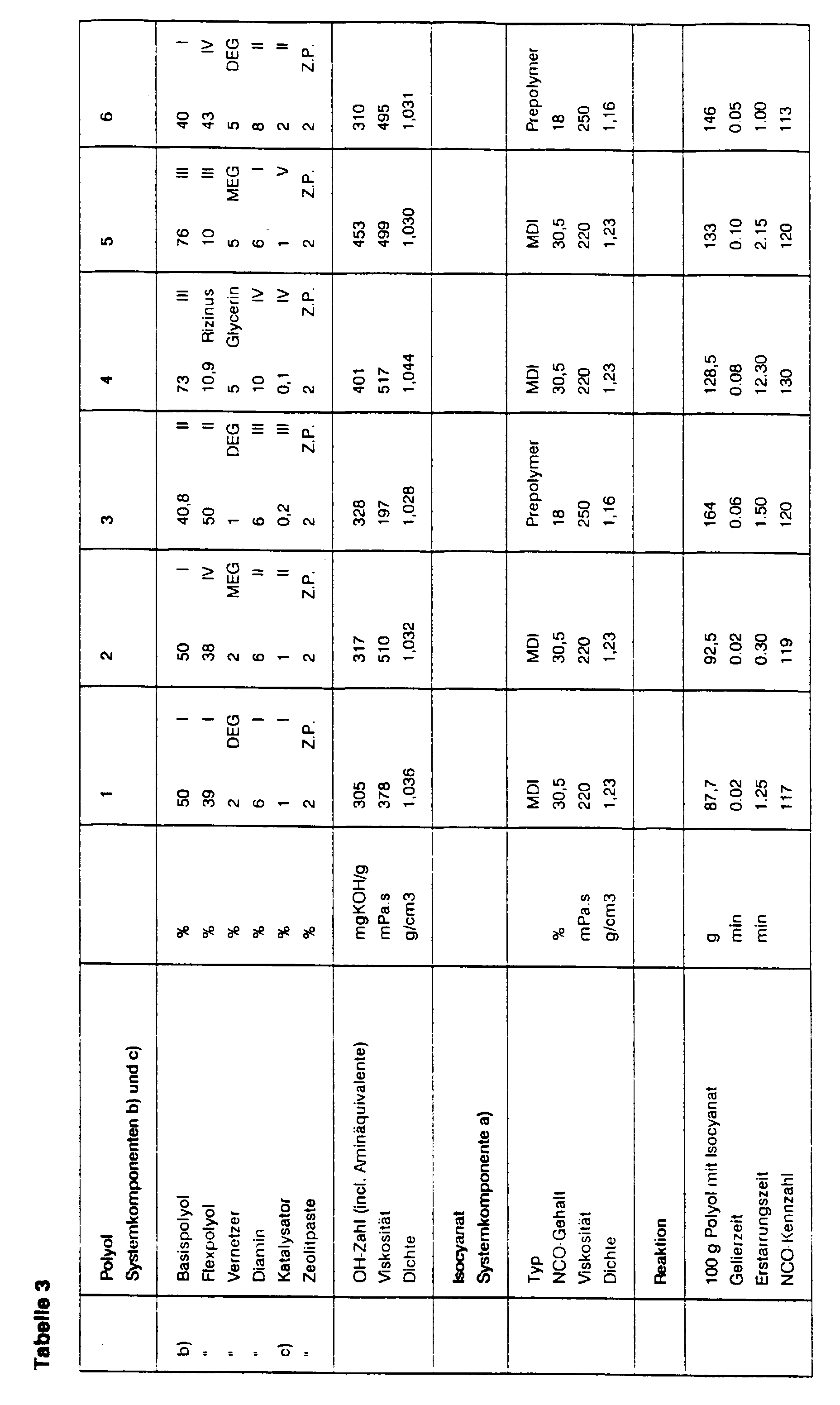

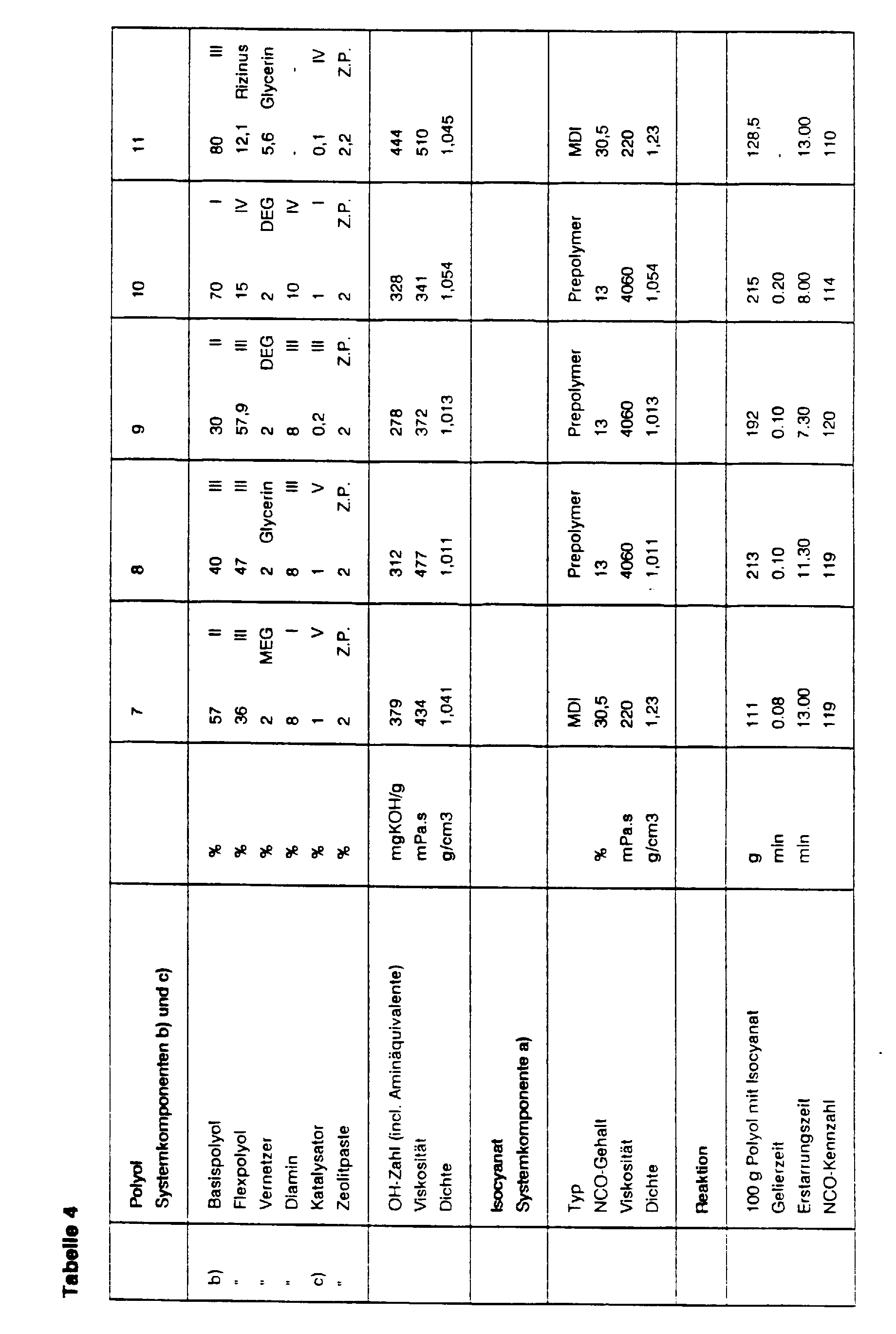

In den Tabellen 3 und 4 sind 10 Beispiele aufgeführt, die die entsprechenden Formulierungsanleitungen enthalten, um die vorgenannten Reaktionsergebnisse zu gewährleisten.

In Beispiel 11 ist ein Gegenbeispiel aufgeführt, bei dem die Systemkomponente b) ohne ein Diamin zusammengestellt wurde, bei sonst ähnlicher Zusammensetzung wie die Beispiele 1 bis 10. Bei der Anwendung eines solchen Gemisches wurde der spezielle Effekt einer kurzzeitig eintretenden Gelierung zu einer gelartigen Konsistenz bzw. einem quasi-thixotropen Zustand, der zum Festhalten eines Ankers in einem nach oben geneigten Bohrloch befähigt, nicht erreicht.

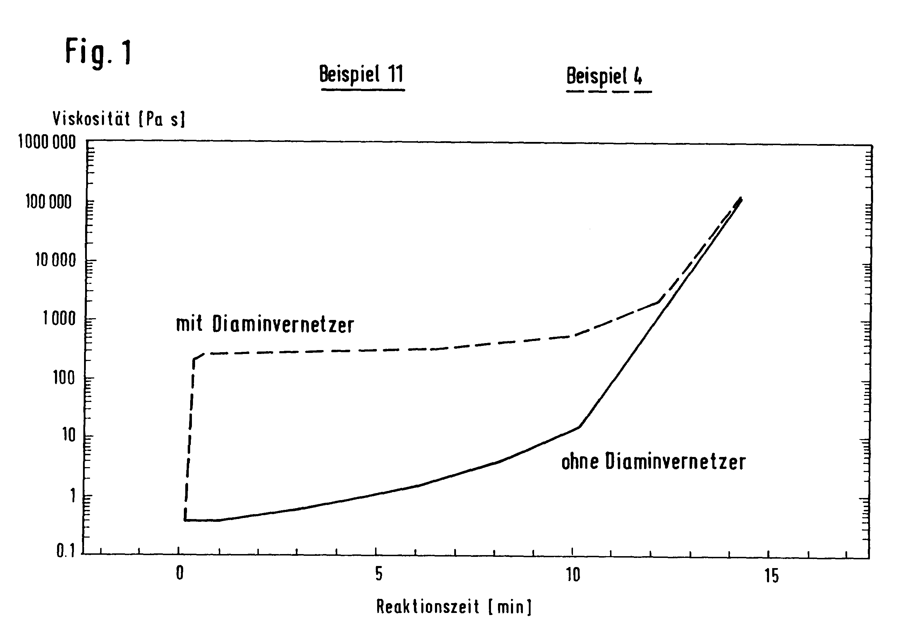

Aus der Figur 1 ist zu entnehmen, daß ein steiler Viskositätsanstieg in Minutenbruchteilen nur bei Gemischen erreicht wird, in denen ein Diaminvernetzer, wie am Gemisch nach Beispiel 4 aufgezeigt ist, verwendet wird und daß demgegenüber ohne Diaminvernetzer, wie am Beispiel 11 demonstriert ist, nur eine allmähliche Viskositätszunahme erfolgt, so daß dieses Gemisch nicht in der Lage ist, einen Anker in einem nach oben geneigten Bohrloch festzuhalten.

Bei Injektionsharzen auf der Basis von Zweikomponenten-Polyurethanharzen, die keine gelartige Konsistenz nach dem Vermischen der Komponenten ausbilden, kommt es bei der Anwendung im stark zerklüfteten Gestein zu einem Versickern infolge Schwerkrafteinwirkung. Bei dem erfindungsgemäßen Polyurethanharzsystem auf Basis eines Zweikomponenten-Polyurethans steigt dieses nach dem Vermischen der niedrig viskosen Einzelkomponenten im Volumenverhältnis 1 : 1 nach 2 - 12 Sekunden zu einem schmierfettartigen Produkt an, das nach 4 - 5 Minuten aushärtet.

Das System ist mit der bekannten Injektionstechnik für Zweikomponenten-Polyurethangemische zu verarbeiten, so daß keine speziellen Dosierpumpen erforderlich sind.

### Anwendungsbeispiel 12 (Injektionsversuch)

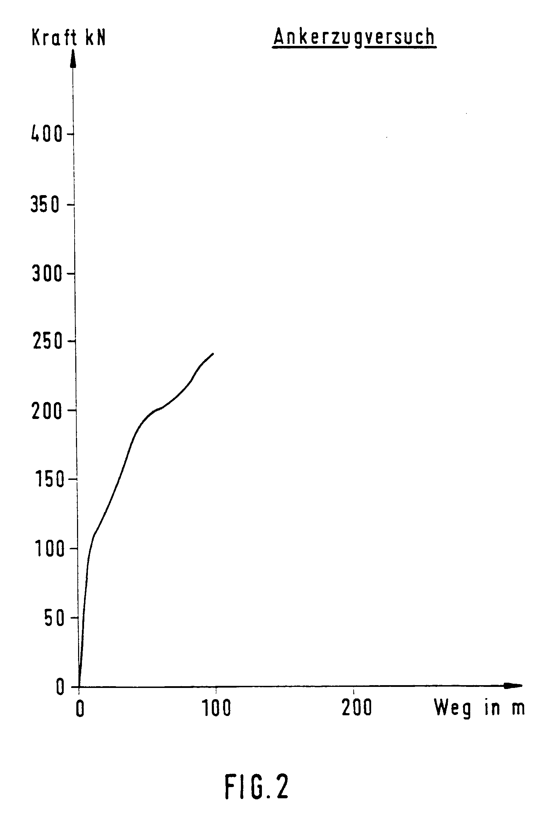

Ein Injektionsanker wurde in ein feuchtes künstliches Gestein (Anhydrit) in ein Bohrloch eingesteckt. Das Harzgemisch mit gelartiger Konsistenz trat bei dem zu verfüllenden, ansteigenden Bohrloch im Bohrlochtiefsten aus dem Injektionsanker aus und mußte vom Bohrlochtiefsten aus gleichmäßig bis zum Bohrlochmund zurückgedrückt werden, weil es wegen seiner gelartigen (quasi-thixotropen) Konsistenz nicht selbsttätig unter dem Schwerkrafteinfluß abwärts geflossen ist. In Fig. 2 ist das Belastungsdiagramm des Ankerversuchs dargestellt. Es zeigt die Kraftaufnahme des Injektionsankers. Bei einer Einkleblänge von 50 cm wurde der Anker nach 1 Stunde Aushärtezeit belastet. Der Anker konnte nicht aus dem Bohrloch herausgezogen werden, sondern er wurde mit einer Kraft von 250 kN abgerissen.

### Anwendungsbeispiel 13

An leichtgeschäumten Probekörpern sind im Labor Festigkeitsuntersuchungen durchgeführt worden. Hierbei wurden folgende Werte ermittelt:
- Druckfestigkeit 20,4 N/mm²
- Biegezugfestigkeit 5,2 N/mm²
- E-Modul 1,1 kN/mm²
- Dichte 695 kg/m³

Da das Zweikomponenten-Polyurethan-System in einem Ringspalt wegen des höheren Fließdrucks nicht so stark aufschäumt, kann dort von Festigkeiten ausgegangen werden, die noch über den vorgenannten Werten liegen.

### Anwendungsvergleichsbeispiel 14 mit Seilanker

Bei Ankerarbeiten unter beengten Verhältnissen finden häufig biegsame Seil- oder Bündelanker Anwendung. Der Haftverbund zwischen diesen Ankern und dem Gebirge wird erreicht, indem in das Bohrloch gemäß dem Stand der Technik Ankermörtel auf Zementleimbasis injiziert und der Anker anschließend von Hand eingeschoben wird.

Im Vergleichsbeispiel wurde ein Seilanker von 4 m Länge verwendet, der einen Quetscheinband besitzt, der eine Ankerplatte halten kann, um das Flözhangende an einer Strebsaumkante zu verankern. Es wurde ein Ankermörtel auf Zementbasis verwendet, der in einer einfachen Misch- und Pumpeinrichtung mit Wasser angerührt und über einen Förderschlauch in das Bohrloch eingefüllt wurde. Die Konsistenz des Mörtels war so dickflüssig, das er nicht aus den steil ansteigenden Löchern ausfloß. Die Seilanker ließen sich von Hand in das mit Mörtel gefüllte Bohrloch einschieben.

Der Nachteil dieser Ankermörtel liegt in dem vergleichsweise aufwendigen Zubereiten einer geeigneten Mörtel-Konsistenz, dem anschließend erforderlichen sorgfältigen Säubern der Leitungswege von Mörtelresten durch Freispülen mit Wasser sowie in der im Vergleich zu den schneller abbindenden Klebegemischen auf Kunstharzbasis relativ späten Tragwirkung des Zementmörtels.

### Anwendungsbeispiel 15 mit Seilanker

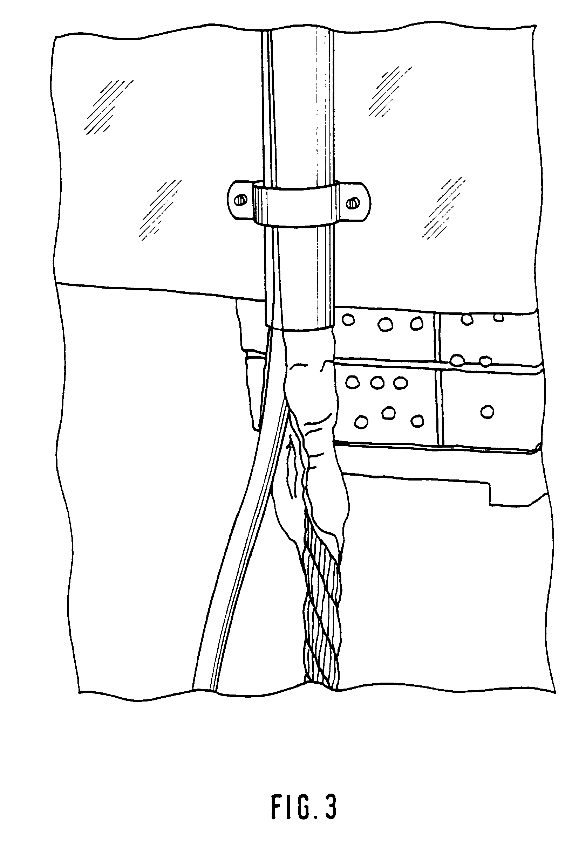

Der Ankersetzversuch wurde mit dem Zweikomponenten-Polyurethansystem in einem 4 m langen einseitig verschlossenen und durchsichtigen Plexiglasrohr durchgeführt. Das Rohr war vertikal aufgestellt und an einem Gesteinsblock befestigt. Im Versuch wurde ein 4 m langer Seilanker bis ins Rohrtiefste eingeschoben. An dem Seilanker war ein Plastikschlauch mit 6 mm Innendurchmesser befestigt. Während des Injizierens entstand im Injektionsschlauch ein Druckverlust von 35 bar. Nach 30 Sekunden war der Ringraum zwischen Anker und Rohrwand vollständig mit Polyurethanharzgemisch ausgefüllt. Das Harzgemisch war so pastös, daß nur ein sehr geringer Teil des gelartigen (quasi-thixotropen) Harzgemisches aus der Rohröffnung herausfloß, wie aus Fig. 3 hervorgeht. Dieser Versuch hat die vorzügliche Festhalte-Eigenschaft des neu entwickelten Zweikomponenten-Polyurethansystems während des anfänglichen gelartigen (quasi-thixotropen) Konsistenzzustandes voll bestätigt. Im Gegensatz zu einem Zementmörtel war der Aushärtevorgang jedoch ungleich schneller beendet, so daß die Tragwirkung des mit Kunstharz verklebten Ankers sehr viel früher wirksam wird.

## Patentansprüche

1. Verfahren zur Anwendung eines Kunstharzsystems auf Polyurethanbasis, wobei das System aus einer Isocyanatkomponente a) und aus einer Polyolkomponente b) besteht sowie den Komponenten a) und/oder b) Hilfs- und Zusatzmitteln c) hinzufügbar sind und die Polyolkomponente b) einen unterschüssigen Anteil von primären oder sekundären Di- oder Polyaminen enthält, **dadurch gekennzeichnet,** daß das System zum Einbringen und Verkleben von Klebankern in Bohrlöchern dient und dazu als Zweikomponenten-System mit den Komponenten a) und b), gegebenenfalls einschließlich von Hilfs- und Zusatzmitteln c), vorformuliert wird, und bei den einzusetzenden Reaktionsgemischen die einzelnen Komponenten in einer solchen Menge vorliegen, die einer Isocyanat-Kennzahl von 90 bis 150 entsprechen, die Komponenten a) und b) kurz vor dem Einbringen in die Bohrlöcher durchmischt werden und das Gemisch spontan eine Erhöhung seiner Viskosität auf eine gelartige Konsistenz, die die Klebanker in den Bohrlöchern festhält, erfährt und dann verzögert aushärtet.

2. Verfahren nach Anspruch 1, **dadurch gekennzeichnet,** daß als Polyisocyanatkomponente a) Polyphenylen-polymethylen-polyisocyanate verwendet werden, wie sie durch Anilin/Formaldehyd-Kondensation und anschließende Phosgenierung hergestellt werden ("polymeres MDI").

3. Verfahren nach Anspruch 1, **dadurch gekennzeichnet,** daß als Polyisocyanatkomponente a) Carbodiimid-, Biuret-, Urethan- und/oder Allophanatgruppen aufweisende, bei Raumtemperatur flüssige Derivate der Polyisocyanate sowie deren Prepolymere, d.h. Umsetzungsprodukte von Polyisocyanaten mit Polyolen im Unterschuß verwendet werden.

4. Verfahren nach Anspruch 3, **dadurch gekennzeichnet,** daß als Polyole zur Herstellung von Prepolymeren aus der Polyurethanchemie allgemein bekannte Verbindungen in Betracht kommen.

5. Verfahren nach Anspruch 4, **dadurch gekennzeichnet,** daß langkettige Polyole mit OH-Zahlen unterhalb von 150 mg KOH/g Substanz verwendet werden.

6. Verfahren nach Anspruch 5, **dadurch gekennzeichnet,** daß bei Raumtemperatur flüssige, durch Phosgenierung von Anilin/Formaldehyd-Kondensaten erhaltene Polyisocyanatgemische ("polymeres MDI") verwendet werden.

7. Verfahren nach Anspruch 6, **dadurch gekennzeichnet,** daß die flüssigen, NCO-Gruppen aufweisende Umsetzungsprodukte der Polyisocyanatgemische mit unterschüssigen Mengen (NCO/OH-Molverhältnis = 1 : 0,005 bis 1 : 0,3) mehrwertiger Alkohole des Molekulargewichtsbereiches 62 bis 3000 verwendet werden.

8. Verfahren nach Anspruch 7, **dadurch gekennzeichnet,** daß Ethergruppen aufweisende Polyole des Molekulargewichtsbereiches 106 bis 3000 verwendet werden.

9. Verfahren nach Anspruch 1, **dadurch gekennzeichnet,** daß Polyisocyanatgemische der Diphenylmethanreihe einer Viskosität bei 25°C von 50 bis 500 mPa.s mit einem NCO-Gehalt von ca. 30 bis 32 Gew.-% eingesetzt werden.

10. Verfahren nach Anspruch 1, **dadurch gekennzeichnet,** daß als Polyolkomponente b) Gemische aus organischen Polyhydroxylverbindungen mit OH-Zahlen zwischen 30 und 2000, wobei die OH-Zahl des Gemisches zwischen 200 und 500 mg KOH/g Substanz liegt, verwendet werden.

11. Verfahren nach Anspruch 10, **dadurch gekennzeichnet,** daß als Polyhydroxylverbindungen Gemische verschiedener Polyetherpolyole verwendet werden.

12. Verfahren nach Anspruch 11, **dadurch gekennzeichnet,** daß als Polyetherpolyole Propoxylierungsprodukte von zweibis achtwertigen Startermolekülen ausgewählt aus Wasser, 1,2-Dihydroxypropan, Trimethylolpropan, Pentaerythrit, Glycerin, Sorbit, Ethylendiamin und gegebenenfalls Rohrzucker verwendet werden.

13. Verfahren nach Anspruch 11 oder 12, **dadurch gekennzeichnet,** daß die Polyhydroxylverbindung eine mittlere Hydroxylfunktionalität von 2,0 bis 5,0 aufweist.

14. Verfahren nach Anspruch 13, **dadurch gekennzeichnet,** daß Gemische von Startermolekülen einer Propoxylierungsreaktion unterzogen werden.

15. Verfahren nach Anspruch 14, **dadurch gekennzeichnet,** daß separat hergestellte Polyhydroxylpolyether nach ihrer Herstellung miteinander abgemischt werden.

16. Verfahren nach Anspruch 1, **dadurch gekennzeichnet,** daß als Amine primäre oder sekundäre Di- oder Polyamine und deren Gemische verwendet werden.

17. Verfahren nach Anspruch 16, **dadurch gekennzeichnet,** daß als aromatische Amine 4,4'Diaminodiphenylmethan, 3,3'Dimethyl-4,4'diaminodiphenylmethan, 3,3'Dichlor-4,4'diaminodiphenylmethan, 1,3,5-Triisopropyl-2,4-diaminobenzol, 1-Methyl-3,5-diethyl-2,4-diaminobenzol, 1-Methyl-3,5-diethyl-2,6-diaminobenzol, 1,3,5-Triethyl-2,4-diaminobenzol und technische Gemische mit den drei letztgenannten Verbindungen, 3,5-Di(methylthio)-2,4-toluoldiamin, 3,5-Di(methylthio)-2,6-toluoldiamin und deren technische Gemische, 1,2-Ethylen-di-(4-amino)thiophenol-ether, 1,3-Propandiol-di(p-amino)-benzoat, 3,5-Diamino-4-chlorobenzoesäure-isobutylester, 1,3-Propylen-di-(4-amino)benzoat verwendet werden.

18. Verfahren nach Anspruch 16, **dadurch gekennzeichnet,** daß als cycloaliphatische Amine Isophorondiamin, 4,4'Diaminodicyclohexylmethan, 3,3'Dimethyl-4,4'diaminocyclohexylmethan, N-Cyclohexyl-1,3-diaminopropan, N-(β-Aminoethyl)piperazin verwendet werden.

19. Verfahren nach Anspruch 16, **dadurch gekennzeichnet,** daß als aliphatische Amine Diethylentriamin, Triethylentetramin, Tetraethylenpentamin, Di-isopropyltriamin verwendet werden.

20. Verfahren nach Anspruch 1, **dadurch gekennzeichnet,** daß die gegebenenfalls mitzuverwendenden Hilfs- und Zusatzmittel c) mit der Polyolkomponente b) vereinigt werden, worauf sich die Verarbeitung nach dem Zweikomponenten-System anschließt.

## Claims

1. A process for using a synthetic resin system based on polyurethane, wherein the system comprises an isocyanate component **a)** and a polyol component **b)**, and auxiliary agents and additives c) can be added to the components **a)** and/or **b)**, and the polyol component **b)** contains a deficit proportion of primary or secondary di- or polyamines, **characterized in that** the system is used for inserting and cementing roof bolts in bore holes and for this purpose is pre-formulated as a two-component system with the components **a)** and **b)**, optionally including auxiliary agents and additives **c)**, and, in the reaction mixtures to be used, the individual components are present in a ratio corresponding to an isocyanate coefficient of from 90 to 150, the components **a)** and **b)** are thoroughly mixed shortly before insertion into the bore holes and the mixture spontaneously undergoes an increase in its viscosity to a gel-like consistency which holds the roof bolts firmly in the bore holes, and it then hardens after a delay.

2. A process according to Claim 1, **characterized in that** polyphenylene polymethylene polyisocyanates, as produced by aniline/formaldehyde condensation and subsequent phosgenation ("polymeric MDI"), are used as the polyisocyanate component **a)**.

3. A process according to Claim 1, **characterized in that** derivatives of the polyisocyanates, which comprise carbodiimide, biuret, urethane and/or allophanate groups and which are liquid at room temperature, as well as pre-polymers thereof, *i.e.* reaction products of polyisocyanates with polyols in deficit, are used as the polyisocyanate component **a).**

4. A process according to Claim 3, **characterized in that** compounds generally known from polyurethane chemistry can be used as polyols for preparing pre-polymers.

5. A process according to Claim 4, **characterized in that** long-chain polyols with OH values below 150 mg KOH/g substance are used.

6. A process according to Claim 5, characterized in that polyisocyanate mixtures ("polymeric MDI"), which are liquid at room temperature and which are obtained by the phosgenation of aniline/formaldehyde condensates, are used.

7. A process according to Claim 6, **characterized in that** the liquid reaction products of the polyisocyanate mixtures comprising NCO groups and with deficit quantities (NCO/OH molar ratio = 1 : 0·005 to 1 : 0·3) of multivalent alcohols in the molecular weight range of 62 to 3000 are used.

8. A process according to Claim 7, **characterized in that** polyols in the molecular weight range of 106 to 3000 comprising ether groups are used.

9. A process according to Claim 1, **characterized in that** polyisocyanate mixtures of the diphenylmethane series of a viscosity of from 50 to 500 mPa.s at 25°C and with an NCO content of approximately from 30 to 32% by weight are used.

10. A process according to Claim 1, **characterized in that** mixtures of organic polyhydroxyl compounds with OH values of between 30 and 2000 are used as the polyol component **b),** wherein the OH value of the mixture is between 200 and 500 mg KOH/g substance.

11. A process according to Claim 10, **characterized in that** mixtures of different polyether polyols are used as the polyhydroxyl compounds.

12. A process according to Claim 11, **characterized in that** propoxylation products of bi- to octavalent starter molecules, selected from water, 1,2-dihydroxypropane, trimethylolpropane, pentaerythrite, glycerol, sorbitol, ethylenediamine and optionally cane sugar [*sic* - *recte* sucrose?], are used as the polyether polyols.

13. A process according to Claim 11 or 12, **characterized in that** the polyhydroxyl compound has an average hydroxyl functionality of from 2·0 to 5·0.

14. A process according to Claim 13, **characterized in that** mixtures of starter molecules are subjected to a propoxylation reaction.

15. A process according to Claim 14, **characterized in that** polyhydroxyl polyethers prepared separately are mixed with one another after their preparation.

16. A process according to Claim 1, **characterized in that** primary or secondary di- or polyamines and mixtures thereof are used as the amines.

17. A process according to Claim 16, **characterized in that** 4,4'-diaminodiphenylmethane, 3,3'-dimethyl-4,4'-diaminodiphenylmethane, 3,3'-dichloro-4,4'-diaminodiphenylmethane, 1,3,5-triisopropyl-2,4-diaminobenzene, 1-methyl-3,5-diethyl-2,4-diaminobenzene, 1-methyl-3,5-diethyl-2,6-diaminobenzene, 1,3,5-triethyl-2,4-diaminobenzene and industrial mixtures with the three last-named compounds, 3,5-di(methylthio)-2,4-toluenediamine, 3,5-di(methylthio)-2,6-toluenediamine and industrial mixtures thereof, 1,2-ethylene-di(4-amino)thiophenol ether, 1,3-propanediol-di(p-amino)-benzoate, 3,5-diamino-4-chloroisobutyl benzoate, 1,3-propylene-di-(4-amino)benzoate are used as aromatic amines.

18. A process according to Claim 16, **characterized in that** isophorone diamine, 4,4'-diaminodicyclohexylmethane, 3,3'-dimethyl-4,4'-diaminocyclohexylmethane, N-cyclohexyl-1,3-diaminopropane, N-(β-aminoethyl)piperazine are used as cycloaliphatic amines.

19. A process according to Claim 16, **characterized in that** diethylenetriamine, triethylenetetramine, tetraethylenepentamine, di-isopropyltriamine are used as aliphatic amines.

20. A process according to Claim 1, **characterized in that** the auxiliary agents and additives **c)** to be optionally jointly used are combined with the polyol component **b)**, which is followed by processing in accordance with the two-component system.

## Revendications

1. Procédé pour l'utilisation d'un système de résine synthétique à base de polyuréthane, le système se composant d'un composant d'isocyanate a) et d'un composant de polyol b), des additifs et des adjuvants c) pouvant être ajoutés aux composants a) et/ou b) et les composants de polyol b) comprenant une part déficitaire de diamines ou polyamines primaires ou secondaires, caractérisé en ce que le système sert à introduire et à coller des boulons d'ancrage dans des trous de forage et, pour ce faire, est préformulé, en tant que système à deux composants avec les composants a) et b), y compris éventuellement des adjuvants ou additifs c), et en ce que, dans les mélanges de réaction à utiliser, les différents composants se trouvent dans une quantité qui correspond à un nombre caractéristique d'isocyanates de 90 à 150, en ce que les composants a) et b) sont mélangés juste avant l'introduction dans les trous de forage et le mélange subit spontanément une augmentation de sa viscosité pour atteindre une consistance gélatineuse si bien que les boulons d'ancrage à coller sont maintenus dans les trous de forage, et durçit ensuite à retardement.

2. Procédé selon la revendication 1, caractérisé en ce qu'en tant que composant de polyisocyanate a) sont utilisés des polyphénylène-polyméthylène-polyisocyanates tels qu'ils sont fabriqués par condensation aniline/formaldéhyde et ensuite par phosgénisation (polymères MDI).

3. Procédé selon la revendication 1, caractérisé en ce qu'en tant que composants de polyisocyanate a), sont utilisés des dérivés des polyisocyanates, liquides à température ambiante et présentant des groupes d'uréthane, de biuret de carbodiimide et/ou d'allophanate ainsi que leurs prépolymères, c'est-à-dire les produits de transformation de polyisocyanates avec du polyol en déficit.

4. Procédé selon la revendication 3, caractérisé en ce qu'en tant que polyoles pour la fabrication de prépolymères sont pris en compte des composés connus de manière générale dans la chimie de polyuréthanne.

5. Procédé selon la revendication 4, caractérisé en ce que des polyoles à longues chaînes, avec des nombres OH sont utilisés en dessous de 150 mg KOH/g de substance.

6. Procédé selon la revendication 5, caractérisé en ce qu'on utilise des mélanges de polyisocyanates liquides à température ambiante et obtenus par phosgénisation de produits de condensation d'aniline/formaldéhyde ("polymères MDI").

7. Procédé selon la revendication 6, caractérisé en ce qu'on utilise les produits liquides de transformation des mélanges de polyisocyanate, les produits présentant des groupes NCO et les mélanges présentant des quantités déficitaires (rapport molaire NCO/OH - 1 : 0,005 à 1 : 0,3) d'alcools polyvalents de la plage de poids moléculaire comprise entre 62 et 3000.

8. Procédé selon la revendication 7, caractérisé en ce qu'on utilise des polyoles, présentant des groupes d'éther et de plage de poids moléculaire comprise entre 106 et 3000.

9. Procédé selon la revendication 1, caractérisé en ce qu'on utilise des mélanges de polyisocyanate de la série de diphénylméthane d'une viscosité comprise entre 50 et 500 mPa.s à 25 °C et d'une teneur en NCO d'environ 30 à 32 % en poids.

10. Procédé selon la revendication 1, caractérisé en ce qu'on utilise en tant que composants de polyole b), des mélanges à partir de composés organiques de polyhydroxyle avec des nombres OH compris entre 30 et 2000, le nombre OH du mélange étant compris entre 200 et 500 mg KOH/g de substance.

11. Procédé selon la revendication 10, caractérisé en ce qu'on utilise en tant que composés de polyhydroxyle des mélanges de différents polyétherpolyoles.

12. Procédé selon la revendication 11, caractérisé en ce qu'on utilise en tant que polyétherpolyoles des produits de propoxylation de molécules de starter de deux à huit valences, sélectionnées parmi l'eau, 1,2-dihydroxypropane, triméthylolpropane, pentaerythrite, la glycérine, le sorbitol, le diamine d'éthylène et éventuellement le sucre brut.

13. Procédé selon la revendication 11 ou 12, caractérisé en ce que le composé de polyhydroxyle présente une fonctionnalité d'hydroxyle comprise entre 2,0 et 5,0.

14. Procédé selon la revendication 13, caractérisé en ce que les mélanges de molécules starter sont soumis à une réaction de propoxylation.

15. Procédé selon la revendication 14, caractérisé en ce que des polyhydroxylpolyéthers, fabriqués séparément, sont mélangés entre eux après leur fabrication.

16. Procédé selon la revendication 1, caractérisé en ce qu'on utilise en tant qu'amine, la diamine ou la polyamine primaire ou secondaire ou leurs mélanges.

17. Procédé selon la revendication 16, caractérisé en ce qu'en tant qu'amines aromatiques sont utilisés 4,4'-diaminodiphénylméthane, 3,3'diméthyl-4,4'diaminodiphénylméthane, 3,3'dichlore-4,4'diaminodiphénylméthane, 1,3,5-triisopropyle-2,4-dianinine, 1-méthyle-3,5-diéthyle-2,4-dianinine, 1-méthyle-3,5-diéthyle-2,6-dianinine, 1,3,5-triéthyle-2,4-dianinine et des mélanges techniques avec les trois composés cités en dernier, 3,5-di(méthylthio)-2,4-diamine de toluène, 3,5-di(méthylthio)-2,6-diamine de toluène et leurs mélanges techniques, 1,2-éthylène-di-(4-amino)thiophénol-éther, 1,3-propandiol-di(p-amino)-benzoate, 3,5-diamino-4-acide chlorobenzoïque-ester isobutylique, 1,3-propylendi-(4-amino)benzoate.

18. Procédé selon la revendication 16, caractérisé en ce qu'en tant qu'amines cycloaliphatiques sont utilisés l'isophorondiamine, 4,4'diaminodicyclohéxylméthane, 3,3'diméthyl-4,4'diaminocyclohéxylméthane, N-cyclohéxyl-1,3-diaminopropane ou N-(β-aminoéthyle)pipérazine.

19. Procédé selon la revendication 16, caractérisé en ce qu'en tant qu'amines aliphatiques sont utilisées la triamine de diéthylène, la tétramine de triéthylène, la pentamine de tétraéthylène, la triamine di-isopropylique.

20. Procédé selon la revendication 1, caractérisé en ce que les additifs et adjuvants c), devant être éventuellement utilisés, sont réunis avec le composant de polyole b), sur quoi s'enchaîne le traitement selon le système à deux composants.
